(19) Europäisches Patentamt
European Patent Office
Office européen des brevets

(11) **EP 2 527 213 A1**

(12) **EUROPEAN PATENT APPLICATION**

(43) Date of publication:
**28.11.2012 Bulletin 2012/48**

(51) Int Cl.:
***B60R 22/48*** *(2006.01)* ***A44B 11/25*** *(2006.01)*

(21) Application number: **12382200.9**

(22) Date of filing: **24.05.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **27.05.2011 ES 201130881**<br><br>(71) Applicant: **Seat, S.A.**<br>**08760 Martorell - Barcelona (ES)** | (72) Inventor: **Fernandez Gonzalez, José Luis**<br>**08760 Martorell - Barcelona (ES)**<br><br>(74) Representative: **Carvajal y Urquijo, Isabel et al**<br>**Clarke, Modet & Co.**<br>**Patentes**<br>**C/Goya no. 11**<br>**28001 Madrid (ES)** |

(54) **System and method for detecting the correct fastening of a seat belt**

(57)    The present invention relates to a detection system and method for detecting the correct fastening of a seat belt. The system comprises:

weighing means for obtaining the weight ($P$) of the seated person;

sensor means for detecting the fastening of the belt;

sensor means for measuring the length of an unwound band for obtaining the length ($\Delta L$) of an unwound seat belt band;

control means for:

• detecting (300) the fastening of the belt;
• obtaining (302) the length ($\Delta L$) of an unwound band;
• obtaining (302) the weight ($P$) of the person on the seat;
• determining (308,314) whether the seat belt is correctly fastened depending on the detection (300) of the fastening of the belt and on the values of length ($\Delta L$) of the unwound band and of weight ($P$).

It is used to permanently control the correct fastening of the seat belt of the occupants of the vehicle.

Fig. 3

**EP 2 527 213 A1**

## Description

Field of the Invention

The present invention is encompassed in the field of automotive, it specifically relates to a restraint system and method intended for the passive safety of the occupants of the vehicle. The specific object of the invention consist of an electronic device and a method of locking the seat belt buckle intended for the permanent assurance of correct fastening of the seat belt which can be used to prevent voluntary or involuntary unfastening by children or dependants assuring its correct securing at all times.

Background of the Invention

Today, correctly fastening seat belt during a car trip is a basic need to prevent injuries or to reduce the severity of road accidents within a speed limit. High rate of death or of serious injuries in accidents due to not putting the belt on is well known. Furthermore, there are traffic laws which consider that the person who does not fasten his/her seat belt correctly as committing a serious offence and he/she is fined.

On a journey with children or dependants, the responsibility that they put on their belt falls on the driver. The instinct of children to touch and press any object within their reach is also known which entails the danger of them pressing the button of the buckle and releasing the seat belt while the vehicle is moving, with the subsequent loss of safety in case of an accident. Due to their small size, children can thus easily slip through the band of the belt and remain completely unprotected during the drive. Furthermore, if the driver has to watch out so that children or other dependent passengers do not unfasten it during the trip, it can be a cause of distraction for the driver and cause serious consequences.

The existence of a control system providing more safety to all passengers, preventing the uncontrolled unfastening of the belt and the distraction of the driver is therefore necessary.

In the state of the art known up to now, there are many belt buckle locking mechanisms such as patent DE19818540-C2. This mechanical locking can be dangerous in passenger rescue situations since its unlocking requires a certain minimum force and the children or occupants not having this capacity may be trapped in the vehicle.

Electronic buckle locking systems which are proposed in patent DE10030851-C1, in patent application DE102008018-A1 and in utility model ES1057987 are known. However, these inventions require the express locking by the driver or speed depending locking and they also do not contemplate the possibility of selective locking of the passengers, nor do they distinguish whether a child or an adult occupant is locked.

Patent document CH618094-A5 describes an opening device for opening any lock, provided with sensors for automatically releasing the attachment in event of an accident, fire or water. However, unfastening during driving by means of a controlled locking of the lock is not prevented therein.

Description of the Invention

The invention proposed herein intends to solve the above problems of the current state of the art with a passive safety system which will selectively or generally prevent the unfastening of belt while driving.

The incorporation of the present invention in a vehicle reduces deaths caused by not correctly fastening the seat belt in an accident.

An object of the present invention is a detection system and method for detecting the correct fastening of the seat belt. The system comprises:

- weighing means for obtaining the weight of the person sitting on the seat corresponding to the seat belt;
- sensor means for detecting the fastening of the belt;
- sensor means for measuring the length of an unwound band responsible for obtaining a measurement for obtaining the length of an unwound seat belt band;
- control means responsible for:

  • detecting the fastening of the belt from the information supplied by the sensor means for detecting the fastening of the belt;
  • obtaining the length of an unwound band from the information supplied by the sensor means for measuring the length of an unwound band;
  • obtaining the weight of the person on the seat from the information supplied by the weighing means;
  • determining whether the seat belt is correctly fastened depending on detecting the fastening of the belt and on the values of length of an unwound band and of weight.

In one preferred embodiment the control means are configured for comparing the length of an unwound band and the weight with values or ranges stored in at least one database and determining the correct fastening of the seat belt depending on said comparison.

The control means are preferably configured for:

- classifying the weight into a specific class depending on its value;
- classifying the length of an unwound band into a specific class depending on its value;
- comparing the classes of weight and length of an unwound band obtained;
- determining whether the seat belt is correctly fastened depending on said comparison and on the detection of the fastening of the belt.

For classifying the weight and the length of an unwound band the control means can be configured for comparing said values of weight and length of an unwound band with values or ranges stored in at least one database.

In the event of determining an incorrect fastening of the seat belt in a first check the control means can be configured for obtaining the weight and length of an unwound band again and reestablishing whether or not the seat belt is correctly fastened. The checks can be performed again in at least any one of the following manner:

- for a specific number of times;
- for a specific time;
- until the correct fastening is detected.

The sensor means for measuring the length of an unwound band preferably comprise an encoder coupled to the rotating shaft of the band winder for counting the number of turns of unwound band.

In the event of detecting the incorrect fastening of the seat belt the control means are preferably configured for performing at least one of the following actions:

- prevent the vehicle motor from starting-up;
- emit an acoustic and/or visual signal.

Correct fastening check can be performed when the ignition key of the vehicle is connected. In this case, correct fastening check can be performed at the time of activating the vehicle ignition and/or while driving the vehicle.

The detection system for detecting the correct fastening of a seat belt can additionally comprise an indicator device indicating the locking state of the seat belt.

The system can comprise electronic locking means for locking the seat belt buckle, the control means being configured for determining whether the person sitting on the seat is a child depending at least on the weight and once the correct fastening of the belt of the child is detected, automatically locking said belt by means of the corresponding electronic locking means.

The system can comprise electronic locking means for locking the seat belt buckle and manual and selective control means for controlling said electronic locking means, the control means being configured for determining whether the person sitting on the seat is an adult depending at least on the weight and once the correct fastening of the belt of the adult is detected, allowing the manual locking of said belt by means of the manual and selective control means for controlling the electronic locking means.

Another aspect of the present invention includes a detection method for detecting the correct fastening of the seat belt which comprises:

- detecting the fastening of the belt;
- obtaining the weight of the person sitting on the seat corresponding to the seat belt;
- obtaining the length of an unwound seat belt band;
- determining whether the seat belt is correctly fastened depending on the detection of the fastening of the belt and on the values of the length of an unwound band and of weight.

The method can comprise comparing the length of an unwound band and the weight with values or ranges stored in at least one database and determining the correct fastening of the seat belt depending on said comparison.

The rest of the aforementioned aspects for the detection system for detecting the correct fastening of a seat belt are applicable for the equivalent detection method.

Brief Description of the Drawings

A series of drawings aiding to better understand the invention and which are expressly related with one embodiment of said invention depicted as a non-limiting example thereof will be briefly described below.

Figure 1 shows the ignition diagram of the locking state light indicator.

Figures 2A, 2B, 2C, 2D and 2E show the seat belt buckle locking mechanism.

Figure 3 shows the check diagram of the correct fastening of the seat belt.

Figure 4 shows an interior view of the vehicle where the detection system object of the present invention is installed.

Figure 5 shows the band winder with the sensor means for measuring the length of an unwound band in detail.

Figure 6 shows the comparison of the data of length with that of weight for determining the correct fastening of the seat belt.

Figure 7 schematically shows the electrical connections of the different elements of the detection system object of the invention.

Detailed Description of the Invention

The system has two operating modes, manual and automatic; and the manufacturer will programme one or the other with the possibility of reprogramming it.

Manual mode is a safety system intended for all the passengers of the vehicle and especially for children. In this mode, the children must fasten the belt correctly before starting-up the motor as established by law. When the ignition key is inserted and contact is made, first the seats occupied by children are detected and then the correct fastening of the respective seat belts is checked. If these two prerequisites are met, the locking of the belt buckle of these children is automatically activated. If in contrast, a child is detected and the correct fastening check is negative, the buckle is not locked and, furthermore, the motor cannot be started-up.

Similarly to children, there can be disabled adult occupant or an adult occupant with a mental deficiency, increasing the possibility of unfastening the belt unconsciously or involuntarily. To that end in this manual mode the driver has the option of locking the belt buckle manually and selectively for any passenger once the key has been inserted into the ignition or with the vehicle running. This manual locking by the driver will be activated by pressing a button or touch screen arranged within his/her the reach.

Both the locked child and dependent adult will thus be unable to unfasten the belt during the entire drive until the driver turns off the vehicle motor, moment in which all the previously locked buckles will be deactivated. The driver can also manually unlock any buckle at any time through the mentioned button or screen. The driver additionally has the possibility of generally locking and unlocking the buckles of all the belts.

The locking system can further have the already known occupant detection and fastening detection system; therefore upon starting up the motor, an acoustic or optical warning signal is emitted when the vehicle reaches a certain speed and an adult occupant does not fastened the belt.

The child detection system measures the load force on the seat by means of already known pressure sensors and classifies the occupants by categories according to their weight. One possible occupant classification differentiates between the following weight categories or classes:

    I. An empty seat or with an empty child seat;
    II. A child sat on a child seat up to group I (uses the belt of the child seat itself);
    III. A child sat on a child seat of groups II and III (uses the belt of the vehicle);
    IV. An adult of low weight and volume;
    V. An adult of high weight and volume.

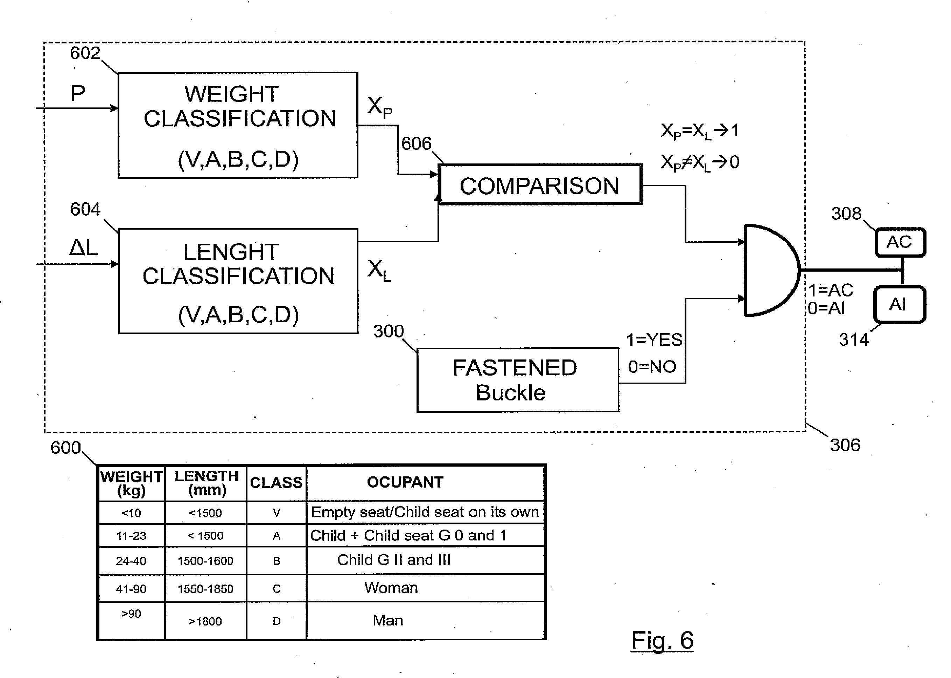

An example of weight ranges is set forth in Table 600 of Figure 6.

This occupant classification is necessary for correct belt fastening check, which will be explained in detail below.

Distinguishing the first group is necessary so that the correct fastening assurance system (acoustic warning or start-up inhibition) is not activated when there is no passenger.

Distinguishing between the children using the belt of the vehicle and those using the belt of the child seat is necessary because the band length is different when the belt is used for securing the seat than for securing a child.

The classes for adults can be subdivided in narrower weight ranges depending on the precision required for detecting the correct fastening.

The automatic locking by child detection must be activated when, in addition to the fastening of the buckle, a weight of one of the three first classes corresponding to a maximum of 40 kg (weight of a child seat of group III plus the weight of a heavier child (36 kg) which by law must use an infant restraint system) is detected.

All the electronic systems are connected to a control box so that the latter transmits it to the correct receiver thereof.

Automatic mode is a maximum safety system for all the occupants of the vehicle, the objective of which is to reduce the possibilities of an occupant not fastening the seat belt correctly in an accident to zero. In this mode, all the passengers must fasten the seat belt correctly before starting-up the motor, as established by law. When the ignition key is inserted and contact is made, first which seats are occupied is detected by means of weight sensors and then whether they are correctly fastened is checked by means of the correct fastening check system. If these two prerequisites are met, the locking of the respective seat belt buckle is automatically activated. If in contrast, an occupant is detected and the correct fastening check is negative, the buckle is not locked and, furthermore, the motor cannot be started-up. Once the buckles are locked, the motor can be started-up and no passenger will be able to unfasten the belt during the drive until the driver turns off the vehicle motor or until the driver deactivates the locking system through the button or touch screen.

For greater safety and to facilitate freeing passengers, in any operating mode, the system will be automatically unlocked in an event of an accident, fire or immersion in water, a reasonable time after the event and when the vehicle is stopped. These events are detected by means of impact sensors, smoke sensors and of humidity sensors, respectively, placed in specific parts of the vehicle. The same impact sensors can be used for activating the airbags, but with other activation signals. If the electric system fails in these or other situations, the mechanism is configured such that the buckles are unlocked, so that the passengers are not trapped by the restraint system.

Nevertheless if in an accident the system is locked and the passengers are trapped by the belt, the restraint system assembly incorporates a special cutter for cutting the band placed in a user accessible space.

The electronic locking device can be activated by a button or push button in the dashboard for each belt and is available to the driver.

Alternatively to the button or push button, the locking system can also be activated by any device with a touch screen, putting the control of the different passenger seats within the reach of the driver such that the driver can easily lock each seat belt buckle separately or generally, without the need of having a button for each belt of the vehicle.

The driver additionally has light indicators indicating the locking state and correct fastening of each of the belts within his/her reach to facilitate the identification of the locked buckles and the incorrectly fastened belts. Said light indicators can be incorporated in the same locking activation buttons.

The locking intends to prevent the unfastening of the buckle in all the possible driving situations.

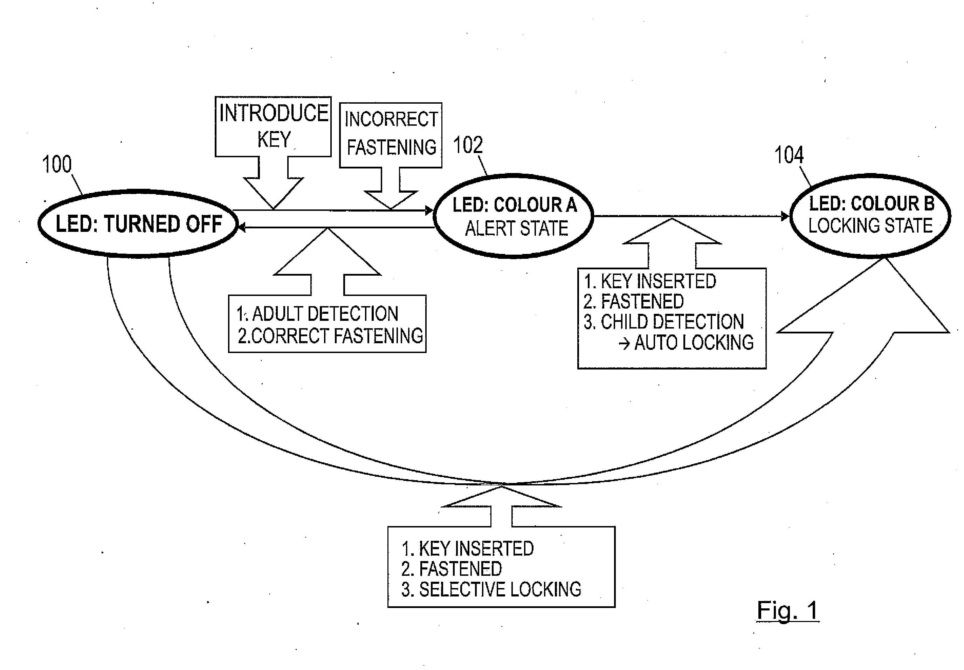

Figure 1 shows the ignition diagram of the locking state light indicator. Initially the locking state indicator is off 100. When the key is inserted into the ignition, the light indicators indicating the unfastened or incorrectly fastened belts is turned on to a first alert state colour 102 (colour A).

- If it is detected through the weight sensors that there is an occupant weighing more than a specific value and he/she fastens the belt correctly, which is detected through a band counter -as will be explained in detail below- and the correct fastening detector, the locking state indicator turns off again.
- If it is detected through the weight sensors that there is an occupant weighing more than a specific value and he/she fastens the belt incorrectly, which is detected through the band counter and the correct fastening detector, the alert state light 102 (colour A) remains turned on.
- If it is detected through the weight sensors that the occupant of any seat is less than a specific weight -child detection-, the locking of the belt of said seat is automatically activated in the manner described above and the light indicator changes colour to a locking state indicator 104 colour B. The locking of the buckle, the correct fastening of the belt and the correct arrangement to start driving is thus identified.
- If the locking of the belt of any occupant is activated manually and selectively by pressing the button or touch screen, the light indicator being turned off, it is turned with the locking state colour (colour B).

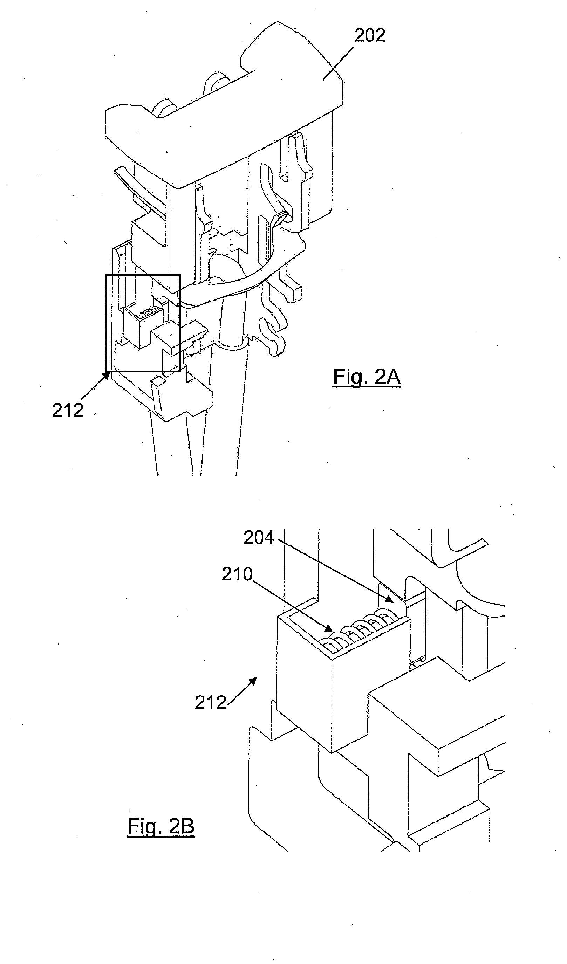

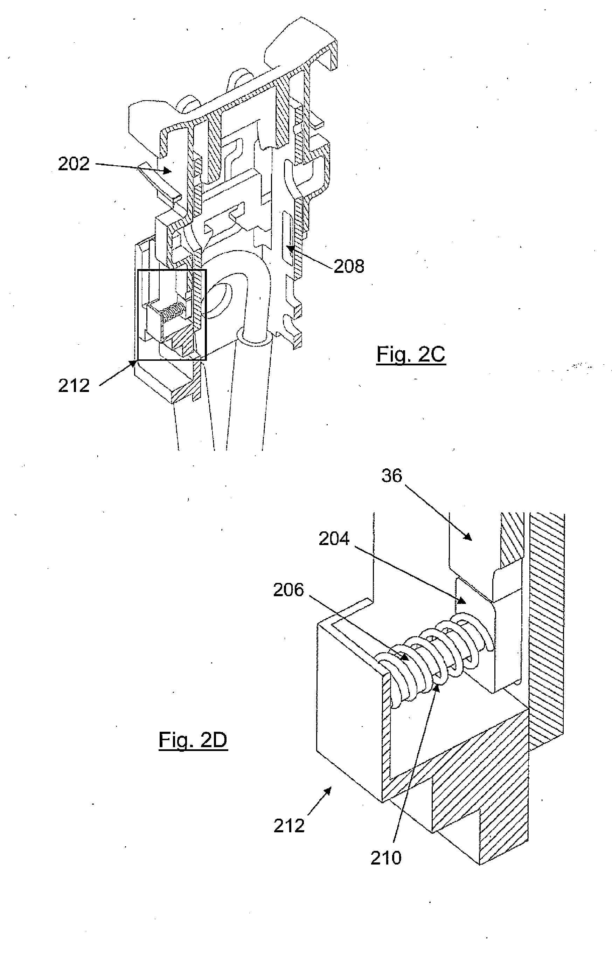

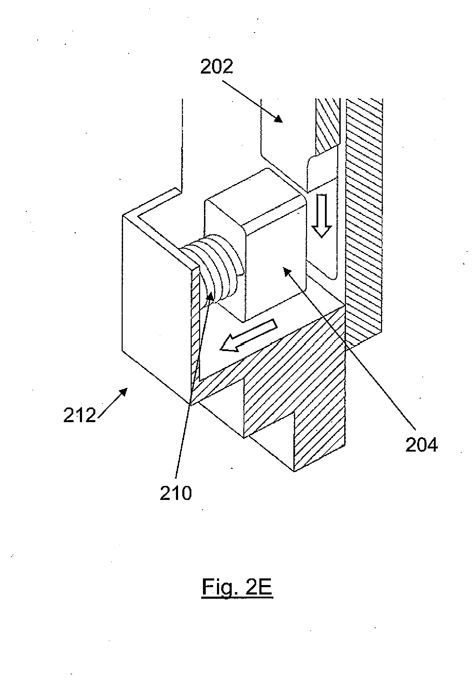

Figures 2A, 2B, 2C, 2D and 2E show the seat belt buckle locking mechanism. Figure 2A shows an elevational view and Figure 2C shows its corresponding vertical cross-section. Figure 2B shows a detail of the seat belt locking mechanism and Figure 2D shows its corresponding vertical cross-section. Figure 2E shows the locking element in an open position (unlocked). A preferred but non-limiting embodiment of the electronic locking device for locking the seat belt buckle consists of a locking part 204 which acts electrically locking an orifice of the buckle mechanism 208 and thus preventing the movement of the buckle opening button 202, i.e., preventing the unfastening of the belt.

The movement of the locking part 204 is caused by the effect of an electromagnet 206, such that when the electromagnet is polarised by an electric signal, a cylinder pushes the locking part inserting it into said orifice of the buckle mechanism, such that the buckle opening button 202 is locked.

The device is further made up of a spring 210 attached to the locking part 204 by means of a shaft, such that in contrast to the above case, when electric signal disappears and the electromagnet is depolarised, the elastic part pulls the locking part 204 to its initial unlocking position, until it is in a position which does not interfere with the path of the buckle opening part or button 202, nor any other part of the belt buckle locking mechanism.

The electromagnet 206 is connected to the locking activation screen or button by means of wiring and through a control box which controls the entire the system.

The child detection system is made up of a load sensor which distinguishes weight ranges inserted inside each of the seats and connected to the locking control box.

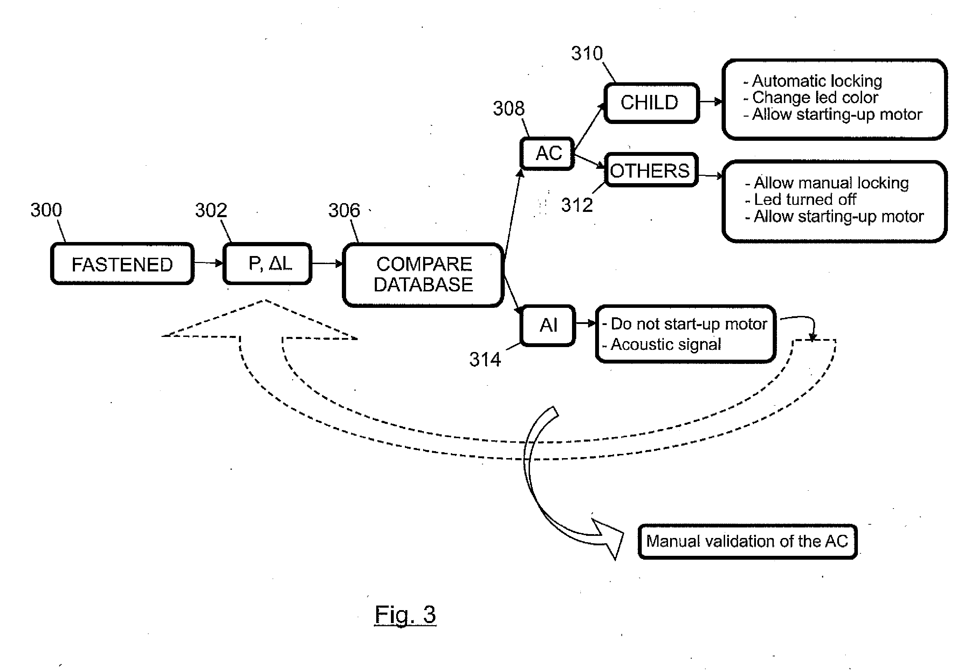

The correct fastening check is shown in Figure 3. It is based on comparing the values of band length pulled by the user when putting the seat belt on and the weight group to which it belongs, with the values from a database saved in the control box of the system.

This database is made up of ranges of values and takes into account all the possible user standards, also considering the pairs of weight and length values of children with and without child seat, as has been explained above.

The band length can be obtained with an encoder motor coupled to the rotating shaft of the belt winder, such that it counts the turns of unwound band. After the fastening of the belt 300, band length values will begin to be taken in short time intervals. Each data pair 302 formed by the value of band length $\Delta L$ obtained together with the weight P of the corresponding user measured by the load sensor of the seat is compared 306 with a database. The first pair of measurements (band length-user weight) which is within the range of values of the database will be considered correct fastening 308, the output will be correct fastening (AC in the figure).

In the case of child detection 310, according to the weight measurement of the load sensor, the output of correct fastening 308 activates the automatic locking of the buckle and changes the light indicator to locking state colour 104 (colour B), which allows starting-up the vehicle, as has been explained above. In the other cases, for example, if an adult 312 is detected, this very output of correct fastening 308 turns off 100 the locking state indicator, as has been explained before, allowing the start-up of the vehicle and the manual and selective locking.

If the values are not in the database, then the output will be of incorrect fastening 314 or error (AI in the figure). In this case, the acoustic and/or optical warning signal will optionally be emitted, the motor will not be able to be started-up and the following data pair 302, band length value and user weight will be taken. This new data will be analysed again and so on so forth until the values are within the range and correct fastening is obtained.

All this occurs in a very short time interval, such that it does not complicate nor slow down the free start-up of the motor. If the real values are not standard values, the driver always has the possibility of manually validating the correct fastening by double-clicking the activation button or screen.

Once the fastening is correct, the system will continue collecting data less frequently during the drive to detect whether any user removes the belt without unfastening it, as children often do. If this occurs, the acoustic warning signal will be emitted.

The weight category of the user is measured with the weight sensor already described above.

The output of the band counter (measurement of the band length value) together with the output of the child detector determine the actuation signal for locking the buckle or for giving the incorrect fastening warning signal and for turning on the alert state indicator 102.

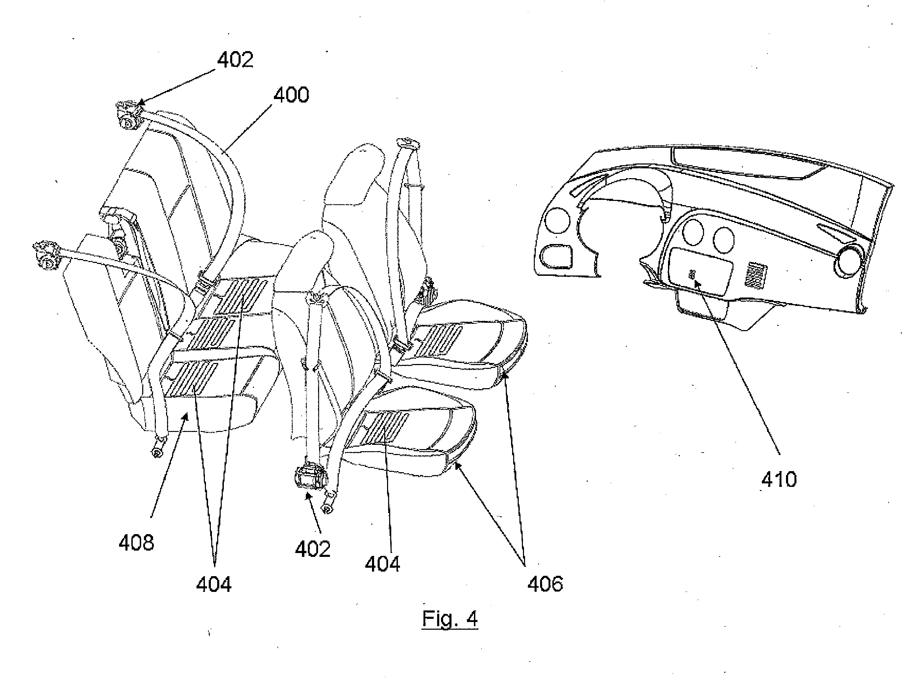

Figure 4 shows an interior view of the vehicle where the detection system of the present invention is installed, with the different elements: band 400 or seat belt band, band winder 402, load sensors 404 of the front seats 406 and back seats 408, and locking state indicators 410 of the seat belts (in this case a screen).

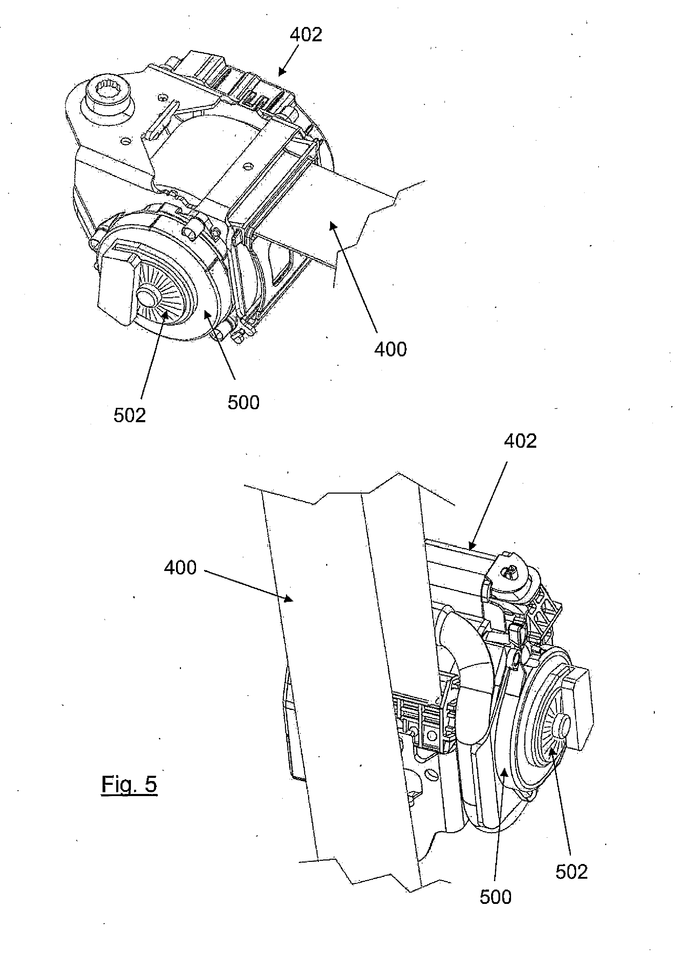

Figure 5 shows the band winder 402 and the sensor means for measuring the length of an unwound band or band counter 500 in detail.

The band counter 500 comprises an encoder 502, which is responsible for determining its position by counting the number of pulses generated when a light beam is crossed by opaque marks on the surface of a disc attached to the shaft. In turn, this shaft is coupled to the rotating shaft of the band winder 402, such that the encoder 502 counts the turns n which made by band winder 402. A control programme (run for example in a microcontroller) is responsible for multiplying the number of turns n by the perimeter of the band reel ($2\pi \cdot r$), thus obtaining the increase in length of an unwound band:

$$\Delta L = 2\pi \cdot r \cdot n$$

$\Delta L$ being the belt band length pulled by the user, r the radius of the band reel (known) and n the number of turns rotated by the reel when the band is pulled.

This length of an unwound band signal is sent to the control box. Another option is to send the signal of the encoder 502 or the number of turns n directly to the control box so that it is responsible to calculate the length of an unwound band. Once the fastening 300 of the seat belt for a seat has been detected (by the buckle fastening sensor), the length of an unwound band $\Delta L$ is classified within a weight range for said seat in the control box and is compared 306 with the classification of the load measured in the corresponding seat by the weight sensor 404 for determining whether the fastening is correct or incorrect.

Figure 6 shows the comparison 306 of the data of length with that of weight for determining the correct fastening of the seat belt in detail. The control box receives the data of length $\Delta L$ measured by the band counter 500, and the data of weight P, measured by the load sensor 404, of an occupant. The control box accesses a previously saved database 600, which is divided into different classes (V,A,B,C,D). Each class corresponds to a weight range and a length range. The figure shows a series of ranges by way of non-limiting examples. The lengths of the table can refer to the increase in the length $\Delta L$ of an unwound band or to the total length L of a deployed belt (L= $\Delta L$ +cte).

The input data of weight P detected through the weight sensor is classified 602 into a class $X_p$ depending on the weight according to the table of the database 600. Likewise, the input data of length $\Delta L$ of an unwound band is classified 602 into a class $X_L$ depending on the length $\Delta L$ according to the table of the database 600.

Next, the control box compares 606 the two classes. If the classes coincide and the belt has been fastened, it is determined that the fastening is correct 308. Correct fastening is understood as that the buckle has been fastened and the pulled band is consistent with the weight of the occupant. In other words, if the band has not been pulled or the length pulled is less than a previously specified low value, the weight must be zero (empty seat) or less than a previously determined load including the weight of an empty child seat. If a large quantity of band has been drawn, it is understood that the occupant occupies a large volume, and therefore the weight measurement must also be high.

If in contrast the compared classes ($X_p$, $X_L$) do not coincide or the buckle has not been fastened, it is determined that the fastening is incorrect. Incorrect fastening is understood as that either the user has not put on the seat belt or has put it on badly. In other words, if for example the user removes the diagonal section of the belt, it is detected with a high weight and a band length corresponding to a lower class.

The output of the data comparison together with the output 300 of the buckle fastening sensor determine whether the fastening is correct 308 or if it is incorrect 314. In contrast, driving can continue normally. In the case of a system error or of a real inconsistency between the volume of the occupant and the load on the seat, the driver will always have the possibility of manually validating the correct fastening. It must be highlighted that while in Figure 3 the fastening of the belt 300 (by means of the buckle fastening sensor) is what initiates the data comparison, in Figure 6 the fastening of the belt 300 is compared with the result of the comparison 606. In other words, the data comparison 306 for determining the correct fastening 308 or incorrect fastening 314 could be activated in different manners: from time to time, when the fastening of the belt 300 is detected, when a variation of length of an unwound band is detected, when a weight is detected on a seat, etc.

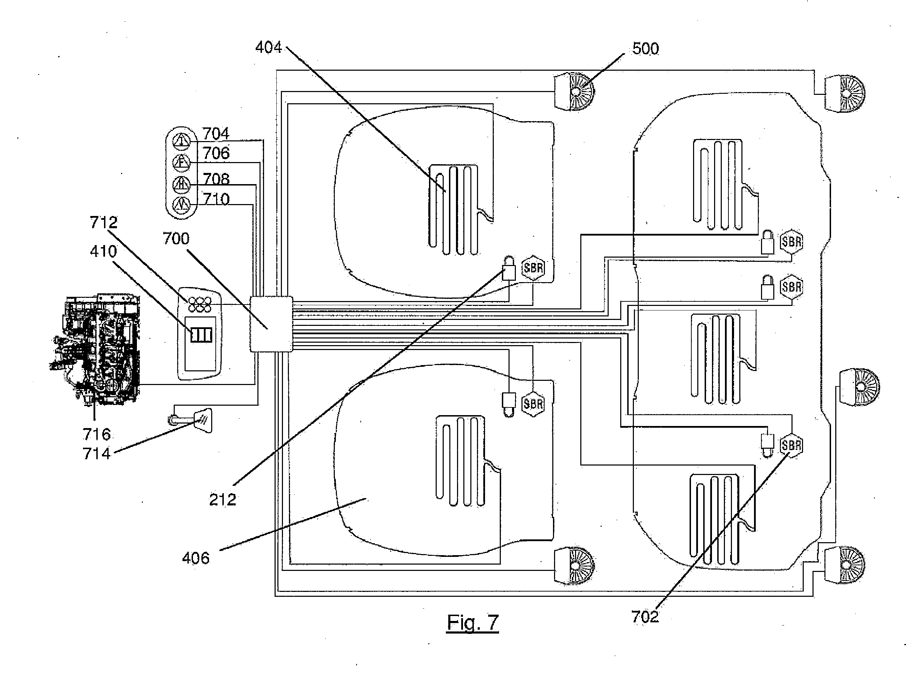

Figure 7 schematically shows the electrical connections of the different elements of the detection system object of the invention. Most of the signals are managed by control means, the control box 700. Said control box 700 receives, among others:

- the signal of the fastening sensor 702 which determines the fastening 300 of the seat belt (i.e., whether or not it is fastened; already known fastening sensors can be used);
- the signal from the band counter 500 (which can either be the signal of the encoder 502 itself or a signal treated by the band counter 500 itself, such as for example, the number of turns n the band winder 402 has made or the length of an unwound band $\Delta L$ calculated as has been explained above);
- the signal from the load sensor 404 of each seat;
- the signals of the impact sensors 704, fire sensor 706, humidity sensor 708, rollover sensor 710;
- the signals of the locking activation buttons 712 usually located next to the driver (being able to be touch sensitive buttons of a screen);
- the signal from the ignition key 714;

The signals received by the control box 700 can either be raw signals which need to be treated (for example, the analogue signal with information of the weight of the load sensors 404, which it will have to be treated according to a previous calibration of said load sensors 404) for obtaining the useful measurement, or the already treated final signal providing the necessary information (for example, if it directly receives the weight P of the load sensors).

The control box 700 in turn controls:

- the ignition of the motor 716;
- the indicators 410 of the locking state of the seat belts of the different seats usually shown on a screen (the indicators can be controlled according to the flow shown in Figure 1);
- the control of the buckle locking mechanism 212, for example, through the control of the electromagnet 210.
- the incorrect fastening acoustic warning.

Although the present invention is especially applicable for detecting the correct fastening of seat belts of motor vehicles, it could also be used in other fields, such as for example, for detecting the correct fastening of the seat belt of seats in moving rides (e.g. cabins with seats) of an amusement park by making the appropriate modifications.

## Claims

1. A detection system for detecting the correct fastening of a seat belt, comprising:

weighing means (404) for obtaining the weight (P) of the person sitting on the seat corresponding to the seat belt;
sensor means for detecting the fastening of the belt (702);
**characterised in that** it additionally comprises:
sensor means for measuring the length of an unwound band (500) responsible for obtaining a measurement for obtaining the length ($\Delta L$) of an unwound seat belt band (400);
control means (700) responsible for:

• detecting (300) the fastening of the belt from the information supplied by the sensor means for detecting the fastening of the belt (702);
• obtaining (302) the length ($\Delta L$) of an unwound band from the information supplied by the sensor means for measuring the length of an unwound band (500);
• obtaining (302) the weight (P) of the person on the seat from the information supplied by the weighing means (404);
• determining (308,314) whether the seat belt is correctly fastened depending on detecting (300) the fastening of the belt and on the values of length ($\Delta L$) of an unwound band and of weight (P).

2. The detection system for detecting the correct fastening of a seat belt according to claim 1, wherein the control means (700) are configured for comparing (306) the length ($\Delta L$) of an unwound band and the weight (P) with values or ranges stored in at least one database (600) and determining (308,314) the correct fastening of the seat belt depending on said comparison.

3. The detection system for detecting the correct fastening of a seat belt according to any of the preceding claims, wherein the control means (700) are configured for:

- classifying (602) the weight (P) into a specific class ($X_p$) depending on its value;
- classifying (604) the length ($\Delta L$) of an unwound band into a specific class ($X_L$) depending on its value;
- comparing the classes of weight (P) and length of an unwound band ($X_L$) obtained;
- determining whether the seat belt is correctly fastened depending on said comparison and on the detection (300) of the fastening of the belt.

4. The detection system for detecting the correct fastening of a seat belt according to claim 3, wherein for classifying (602,604) the weight (P) and the length ($\Delta L$) of an unwound band the control means (700) are configured for comparing said values of weight (P) and length ($\Delta L$) of an unwound band with values or ranges stored in at least one database (600).

5. The detection system for detecting the correct fastening of a seat belt according to any of the preceding claims, wherein in the event of determining an incorrect fastening of the seat belt (314) in a first check the control means are configured for obtaining (302) the weight (P) and length ($\Delta L$) of an unwound band again and reestablishing whether or not the seat belt is correctly fastened.

6. The detection system for detecting the correct fastening of a seat belt according to claim 5, wherein the checks are performed again in at least any one of the following manners:

   - for a specific number of times;
   - for a specific time;
   - until the correct fastening (308) is detected.

7. The detection system for detecting the correct fastening of a seat belt according to any of the preceding claims, wherein the sensor means for measuring the length of an unwound band (500) comprise an encoder (502) coupled to the rotating shaft of the band winder (402) for counting the number of turns of unwound band (400).

8. The detection system for detecting the correct fastening of a seat belt according to any of the preceding claims, wherein in the event of detecting the incorrect fastening (314) of the seat belt the control means (700) are configured for performing at least one of the following actions:

   - prevent the motor (716) of the vehicle from starting-up;
   - emit an acoustic and/or visual signal.

9. The detection system for detecting the correct fastening of a seat belt according to any of the preceding claims, wherein the correct fastening check is performed if the ignition key (714) of the vehicle is connected.

10. The detection system for detecting the correct fastening of a seat belt according to claim 9, wherein the correct fastening check is performed in any of the following situations:

    - at the time of activating the vehicle ignition;
    - while driving the vehicle.

11. The detection system for detecting the correct fastening of a seat belt according to any of the preceding claims comprising an indicator device indicating the locking state of the seat belt.

12. The detection system for detecting the correct fastening of a seat belt according to any of the preceding claims comprising electronic locking means for locking the seat belt buckle, wherein the control means (700) are configured for determining (310) whether the person sitting on the seat is a child depending at least on the weight (P) and once the correct fastening (308) of the belt of the child is detected, automatically locking said belt by means of the corresponding electronic locking means.

13. The detection system for detecting the correct fastening of a seat belt according to any of the preceding claims comprising electronic locking means for locking the seat belt buckle and manual and selective control means for controlling said electronic locking means, wherein the control means are configured for determining (312) whether the person sitting on the seat is an adult depending at least on the weight (P) and once the correct fastening (308) of the belt of the adult is detected, allowing the manual locking of said belt by means of the manual and selective control means for controlling the electronic locking means.

14. Detection method for detecting the correct fastening of a seat belt which comprises:

    detecting (300) the fastening of the belt;
    obtaining (302) the weight (P) of the person sitting on the seat corresponding to the seat belt;
    **characterised in that** it additionally comprises:
    obtaining (302) the length ($\Delta L$) of an seat belt unwound band (400);
    determining (308,314) whether the seat belt is correctly fastened depending on the detection (300) of the fastening of the belt and on the values of length ($\Delta L$) of an unwound band and of weight (P).

15. The detection method for detecting the correct fastening of a seat belt according to claim 14, which comprises comparing (306) the length ($\Delta L$) of an unwound band and the weight (P) with values or ranges stored in at least one database (600) and determining (308,314) the correct fastening of the seat belt depending on said comparison.

Fig. 1

EP 2 527 213 A1

Fig. 2A

212

204
210
212

Fig. 2B

202

208

212

<u>Fig. 2C</u>

36

204

206

212

210

<u>Fig. 2D</u>

202

212

210

204

Fig. 2E

FASTENED — 300

P, ΔL — 302

COMPARE DATABASE — 306

AC — 308

AI — 314

CHILD — 310
- Automatic locking
- Change led color
- Allow starting-up motor

OTHERS — 312
- Allow manual locking
- Led turned off
- Allow starting-up motor

- Do not start-up motor
- Acoustic signal

Manual validation of the AC

Fig. 3

Fig. 4

402

400

502        500

Fig. 5

402

400

502

500

| WEIGHT (kg) | LENGTH (mm) | CLASS | OCUPANT |
|---|---|---|---|
| <10 | <1500 | V | Empty seat/Child seat on its own |
| 11-23 | < 1500 | A | Child + Child seat G 0 and 1 |
| 24-40 | 1500-1600 | B | Child G II and III |
| 41-90 | 1550-1850 | C | Woman |
| >90 | >1800 | D | Man |

Fig. 6

Fig. 7

Europäisches
Patentamt
European
Patent Office
Office européen
des brevets

**EUROPEAN SEARCH REPORT**

Application Number

EP 12 38 2200

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2010/138113 A1 (LEE EUN RYUNG [KR] ET AL) 3 June 2010 (2010-06-03) * paragraph [0023] - paragraph [0124]; figures * ----- | 1,14 | INV. B60R22/48 A44B11/25 |
| A | DE 100 30 851 C1 (KOSTAL LEOPOLD GMBH & CO KG [DE]) 14 February 2002 (2002-02-14) * paragraph [0001] - paragraph [0013]; figures * ----- | 1,14 | |

| | TECHNICAL FIELDS SEARCHED (IPC) |
|---|---|
| | B60R A44B G01G |

The present search report has been drawn up for all claims

| Place of search | Date of completion of the search | Examiner |
|---|---|---|
| Berlin | 4 October 2012 | David, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 527 213 A1

**ANNEX TO THE EUROPEAN SEARCH REPORT
ON EUROPEAN PATENT APPLICATION NO.** EP 12 38 2200

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2012

| Patent document cited in search report | Publication date | Patent family member(s) | Publication date |
|---|---|---|---|
| US 2010138113 A1 | 03-06-2010 | KR 20100063394 A<br>US 2010138113 A1 | 11-06-2010<br>03-06-2010 |
| DE 10030851 C1 | 14-02-2002 | NONE | |

**EP 2 527 213 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19818540 C2
- DE 10030851 C1
- DE 102008018 A1
- ES 1057987
- CH 618094 A5